# EUROPEAN PATENT SPECIFICATION

(11) **EP 2 850 884 B1**
(45) Date of publication and mention of the grant of the patent: **29.08.2018**
(21) Application number: 13723474.6
(22) Date of filing: 14.05.2013
(51) Int. Cl.: H04W 48/18, H04W 76/18

(54) **SERVICE PROVISION IN A CELLULAR COMMUNICATIONS NETWORK COMPRISING CELLS WITH DIFFERENT SERVICE CAPABILITIES**
DIENSTBEREITSTELLUNG IN EINEM ZELLULAREN KOMMUNIKATIONSNETZ MIT ZELLEN MIT VERSCHIEDENEN DIENSTFÄHIGKEITEN
FOURNITURE DE SERVICE DANS UN RÉSEAU DE COMMUNICATION CELLULAIRE COMPRENANT DES CELLULES AYANT DIFFÉRENTES CAPACITÉS DE SERVICE

(30) Priority: 14.05.2012 US 201261646555 P
(43) Date of publication of application: 25.03.2015
(73) Proprietor: Telefonaktiebolaget LM Ericsson (publ), 164 83 Stockholm (SE)
(72) Inventor: KELLER, Ralf, 52146 Würselen (DE); LINDHOLM, Fredrik, S-112 15 Stockholm (SE); HEDMAN, Peter, S-252 51 Helsingborg (SE)
(74) Representative: Brann AB
(86) International application number: PCT/EP2013/059951
(87) International publication number: WO 2013/171219

(56) References cited:
- WO-A1-2011/075240
- WO-A1-2011/096870
- WO-A1-2011/120030
- "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V11.1.0, 8 March 2012 (2012-03-08), pages 1-284, XP050555356, [retrieved on 2012-03-08]

## Description

### Technical Field

The invention generally refers to ensuring service provision, and specifically refers to mobility management and corresponding bearer setup.

### Background

An area (e.g. Tracking Area or Routing Area) or a cellular communications network might have a plurality of cells having different capabilities with respect to specific communication services, e.g. some cells might use FDD (Frequency Division Duplexing) and some cells might use TDD (Time Division Duplexing). A part of the cells might not be able to support a certain service e.g. IP Multimedia Subsystem Packet Switched -IMS PS- Voice or IPTV for any reason. The reason may depend on network/technology related aspects causing the operator not wanting the technology to be used for a certain service, or it may depend on the user equipment -UE- ability to support the service with certain technology (e.g. UE been only tested to support IMS PS voice using FDD and not TDD) or it may depend on not supporting all required capabilities e.g. in TDD while having support for them in FDD (there might be in addition TDD-only cells from some vendors that do not provide support for IMS voice). 3GPP specifications TS 23.401, version 11.0.0 of December 2012 (in the following being referred to as TS 23.401) and TS 23.060, version 11.0.0 of December 2011 (in the following being referred to as TS 23.060) require the network support for IMS PS voice to be homogenous within a Tracking Area (list) -TA- or Routing Area -RA-. The reason is to ensure that the certain service e.g. IMS PS voice calls, will not experience large drop of calls or other service degradation and to allow that the UE does not have to perform TA update - TAU- or RA update -RAU- in the same Tracking Area (list) or Routing Area. WO 2011/075240 A1 describes avoiding establishment of radio bearers in a CSFB procedure.

WO 2011/120030 A1 describes a CSFB procedure. However, the expected deployments of e.g. so-called FEMTO cells or Home eNodeBs (H(e)NodeBs) within the same TA/RA as normal macro cells might cause issues with keeping the TA/RA homogenous with regards to support of IMS PS voice.

According to above-cited 3GPP specifications, a Tracking Area list or Routing Area shall be homogenous with regard to its support of IMS PS voice. Consequently, both FDD and TDD cells may not be included together in a Tracking Area list or Routing Area, when the UE supports IMS PS voice for either FDD or TDD only. This retains a possibility for the UE to use IMS PS voice in a mixed cell situation. To be able to support both Internet/broadband services and as well further services like IMS PS voice services to a UE, a new way to ensure consistent service support is desired.

### Summary

It is an objective of the present invention to provide a possibility for enhancing a usage of communication services requiring capabilities that are provided by all cells the UE might camp. This objective is achieved by the following embodiments. Advantageous embodiments are described as follows. The invention is defined by independent claims 1, 12 and 13. Preferred embodiments are defined by the dependent claims.

The embodiments and/or examples of the following description which are not covered by the appended claims are considered as not being part of the present invention. According to embodiments it is proposed to provide a certain service (e.g. IMS PS voice instead of selecting the CS domain for voice or IPTV), despite the UE is camping on a cell which does not support that service.

Camping on a cell may comprise a state wherein the UE is in idle mode and has performed or completed a cell selection/reselection process and chosen a cell, as well as a state wherein the UE is connected or attached to that cell.

In an embodiment it is proposed to let appropriate entities know that a UE can be moved from a cell lacking the ability to support a certain service (e.g. IMS PS voice) to a cell which is able to support that certain service, allowing appropriate entities initiating the service despite the lack of capabilities or incompatibility with respect to the service of the current cell the UE is camping on.

In an embodiment thereto, during mobility management procedures (e.g. evolved packed core -EPC- mobility management -EMM- or GMM) procedures, the UE is getting information that the service is supported for a Tracking Area list or Routing Area (see e.g. IMS voice over PS Session Supported Indication according to above-cited 3GPP standards TS 23.060 and TS 23.401), despite that the UE cannot use that service in one or a plurality of the cells of the Tracking Area list or Routing Area (the later might be only known to the eNB/RNC).

In an embodiment, the eNB/RNC replies with a Successful Match message when receiving the UE Radio Capability Match Request from the mobility management node (MME or SGSN), despite that the UE capabilities are incompatible with network configuration for the one or the plurality of cells. When the core network CN requests a bearer (e.g. QCI-1 for eUTRAN, or traffic class set to conversational and source statistic descriptor set to 'Speech for UTRAN) to be established, the eNB/RNC moves the UE to a cell (served by the same or different eNB/RNC) were the required capabilities associated to that service are supported. Such movement may be performed before, concurrently or after the bearer has been established.

In another embodiment, it is proposed to ensure that the UE is always kept on cells which are capable of supporting the certain service (e.g. IMS PS voice) that the UE requests. Thereto, a radio access network -RAN- node (eNB or RNC) might ensure (e.g. for one or a plurality of (selected) UEs only) to always camp on cells supporting that certain service.

A trigger for the RAN node to initiate such (RRM) strategy may be e.g. one of:
- Special priority (RFSP/SPID value) allocated,
- at MME/SGSN (or MSC if procedure added to MSC for supporting rSRVCC) usage of the UE Radio Capability Match procedure (according to TS 23.060 and TS 23.401) the eNB (or RNC) starts to apply such RRM strategy,
- MME/SGSN sends SRVCC (Single Radio Voice Call Continuity) possible to eNB (or RNC), and
- new indication from SGSN/MME towards the eNB (or RNC).

The RAN node might also put certain cells which support a certain service on higher priority for the UE, e.g. cells supporting rSRVCC (reverse SRVCC) on higher priority than other cells; the other cells may however still be allowed.

Such RAN node mobility strategy might ensure that a UE is able to get best possible service (i.e. allow UE to be moved using rSRVCC to a cell supporting IMS PS voice, if possible, and still allow best possible coverage even though only CS calls are possible in some cases i.e. when rSRVCC not possible).

The present invention also concerns computer programs comprising portions of software codes in order to implement the method as described above when operated by a respective processing unit of a user device and a recipient device. The computer program can be stored on a computer readable medium associated to any of the herein mentioned network nodes, e.g. a radio access network node such as an eNodeB or RNC as described above. The computer-readable medium can be a permanent or rewritable memory. The respective computer program can be also transferred to the user device for example via a cable or a wireless link as a sequence of signals.

In the following, detailed embodiments of the present invention shall be described in order to give the skilled person a full and complete understanding. However, these embodiments are illustrative and not intended to be limiting.

### Brief Description of the Figures

- Fig. 1: shows an exemplary block diagram of a communication network,
- Fig. 2: shows a first sequence diagram showing service based mobility sequence, wherein the RAN performs UE movement to a cell supporting a certain service, and
- Fig. 3: shows a second sequence diagram showing an exemplary attachment procedure thereto.

### Detailed Description

In the following, exemplary embodiments are described in more details.

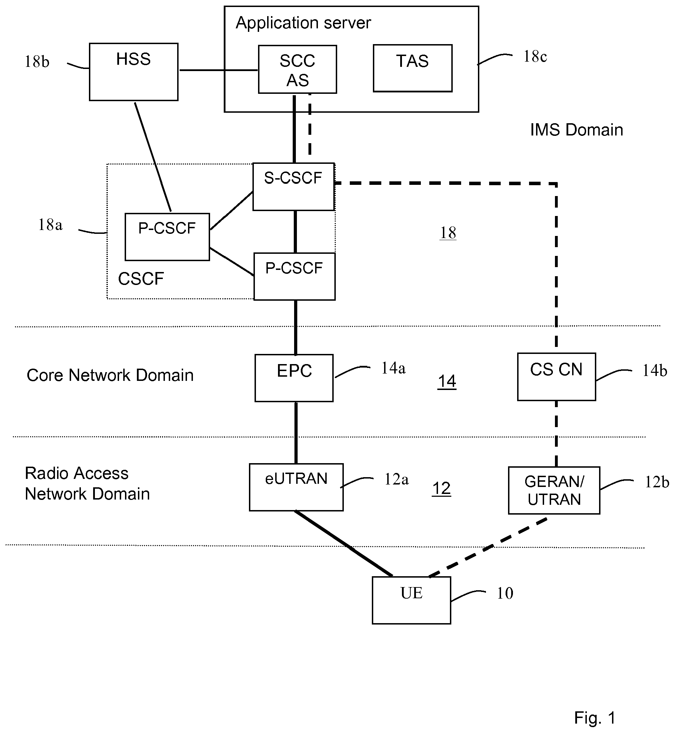

Fig. 1 shows a block diagram of an exemplary communication network comprising a UE 10, a radio access network -RAN- 12, a code network -CN-14 and an IP Multimedia Subsystem -IMS- 18.

The RAN by way of example comprises a evolved UMTS Terrestrial Radio Access Network -eUTRAN- 12a and a legacy GSM EDGE Radio Access Network -GERAN-/ UMTS Terrestrial Radio Access Network -UTRAN- 12b.

The CN 14 by way of example comprises an evolved packet core network - EPS- or -EPC-, and a circuit switched code network 14b. The EPC by way of example may comprise an MME and gateway nodes (S-GW, P-GW).

The IMS 18 by way of example comprises a Call State Control Function - CSCF- 18a, an HSS 18b, and an application server 18c e.g. comprising a service centralization and continuity application server -SCC AS and a telephony application server -TAS- 18.

The Call State Control Function -CSCF- 18a provides session control for UEs by processing SIP signalling packets in the IMS. It may comprise a P-SCSF (Proxy CSCF) node, an I-CSCF (Interrogating CSCF) node and S-CSCF (Serving CSCF) node. The P-CSCF is a SIP proxy that is the first point of contact for the terminal. Amongst other functions, this node supports a subscriber authentication and ensures that the IMS terminals do behave correctly. The S-CSCF is the central node of the signaling plane. It communicates with the HSS e.g. to get subscriber profiles. This node further handles SIP registrations, which allows it to bind the user location (e.g. the IP address of the terminal) and the SIP address. The I-CSCF is a SIP function e.g. located at the edge of an administrative domain. Its IP address is published in the Domain Name System (DNS) to be found by remote servers. Amongst other functions this node queries the HSS to retrieve the address of the S-CSCF and assign it to a user performing a SIP registration, and also forwards SIP request or response to the S-CSCF.

The HSS 18b is a database that supports the PS network entities in handling calls. It comprises subscription related information (e.g. being stored as subscriber profiles), performs authentication and authorization of the user, and might further provide information about the subscriber's location and address information (e.g. IP address). The HSS may interact with the SCC AS to inform the SCC AS e.g. about the currently used access and IMS Voice over PS support indication.

The service centralization and continuity application server -SCC AS- 18c is a home network based IMS Application that provides functionality required to enable IMS Centralized Services. The SCC AS 18c may be regarded as a call control server (communicating by means of the SIP protocol) controlling a communication between the UE and a remote side (e.g. a further UE).

A first connection line (draft line) is shown from the UE 10, over the PS access network 12a, the 14a, the CSCF and the application server 18. A second connection line (dotted line) is shown from the UE 10, over the CS access network 12b, the CS core network 14b, and S-CSCF to the application server 18. The UE 10 may have a plurality of terminals or contacts having different capabilities.

According to 3GPP specifications, SRVCC provides a seamless continuity when an UE 10 performs a handover from LTE coverage (e-UTRAN) to UMTS/GSM coverage (UTRAN/GERAN). With SRVCC, calls are anchored in the IMS while UE is capable of transmitting/receiving on only one of those access networks at a given time, whereas rSRVCC enables a reverse movement from UTRAN/GERAN to e-UTRAN.

In an embodiment, a service based mobility procedure, wherein the RAN performs a UE movement to a cell supporting a certain service is described.

During mobility management (EMM or GMM) procedures, the UE is getting the information that IMS PS voice is supported for a Tracking Area list or Routing Area (referring to IMS voice over PS Session Supported Indication as specified in TS23.060 and TS 23.401), despite that the UE cannot use IMS PS voice service in certain cells of the Tracking Area list or Routing Area (the later might only be known to the eNB/RNC).

The eNB/RNC replies with successful Match when receiving the UE Radio Capability Match Request from the code network (MME or SGSN), despite that the UEs capabilities are incompatible with network configuration for the certain cells.

When the CN is requesting a bearer (e.g. QCI-1 bearer for LTE (class set to conversational and source statistic descriptor set to Speech for UTRAN) to be established, the eNB/RNC is moving (before or after the bearer has been established) the UE to a cell (served by the same or by a different eNB/RNC) supporting IMS PS voice and required capabilities.

Similar RAN node (eNB/RNC) behaviour can be applied for other services (e.g. IPTV) and consequently the trigger may be an appropriate bearer setup (other than a QCI-1 bearer for voice over IMS), or any appropriate bearer modification.

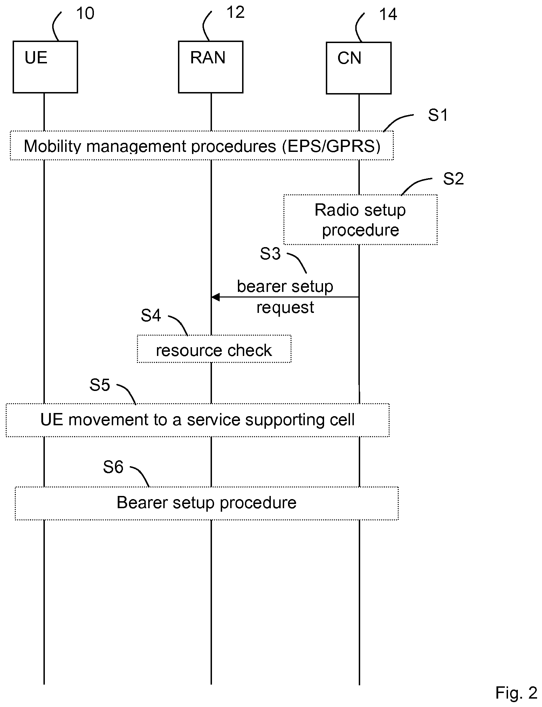

In the following an exemplary sequence is described according to Fig. 2:
1. In a first step S01, during mobility management (EMM/GMM) procedures the core network -CN- 14 (e.g. MME or SGSN) indicates to the UE 10 that the certain service (IMS Voice over PS sessions, IPTV sessions etc) are possible, and RAN 12 indicates to CN 14 that UE Radio capabilities match the network configuration (e.g. according to procedures defined in 3GPP TS 23.060 and/or TS 23.401),
2. In a second step S2, CN 14 tries to setup radio resources for a certain service. Procedure used might depend on the service and whether the involved node of the CN 12 is a SGSN or a MME (e.g. according to procedures defined in 3GPP TS 23.060 and/or TS 23.401),
3. In a third step S3, CN 14 sends a bearer setup request to RAN 12.
4. In a fourth step S4, RAN 12 checks whether resources can be setup and/or if QoS (a certain QoS level) is supported. If QoS (QoS level) is not supported in the current cell, it may be checked whether the UE 10 shall be moved to a cell supporting the QoS for the service,
5. In a fifth step S5, UE 10 is moved to a cell supporting the QoS for the service, and
6. In a sixth step S6, the radio resources are setup.CN14 may be informed about a corresponding successful bearer establishment.

Steps S5 and S6 may be performed in any order, i.e. the radio resources may be setup before, concurrently or after the UE is moved.

In another embodiment, an appropriate node of the RAN 12, e.g. a base station node such as the eNB or RNC, ensures that certain (e.g. selected) UEs always camp on cells supporting a certain service (e.g. IMS PS voice service or IPTV service).

The trigger for the RAN node to initiate such (RRM) strategy may be e.g.
- special RFSP/SPID value allocated,
- at MME/SGSN (or MSC if procedure added to MSC for supporting rSRVCC) usage of the UE Radio Capability Match procedure (e.g. according to procedures defined in 3GPP TS 23.060 and/or TS 23.401), the eNB/RNC starts to apply such RRM strategy,
- MME/SGSN sends SRVCC possible to RNC/eNB, and/or
- a new indication from SGSN/MME towards the eNB/RNC.

The RAN network node (eNB/RNC) may also put certain cells which support a certain service on higher priority for the UE, e.g. by assigning a higher priority to cells supporting (r)SRVCC than to other cells, whereby the other cells are not necessarily disallowed.

Above-described mobility strategies may ensure that the UE is able to get best possible service (i.e. allow UE to be moved using rSRVCC to a cell supporting IMS PS voice, if possible, and still allow best possible coverage even though only CS calls are possible in some cases i.e. when rSRVCC not possible).

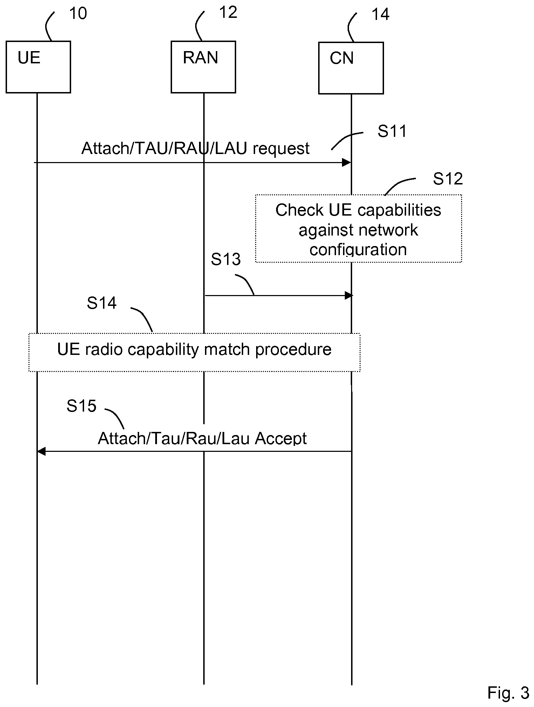

In the following an exemplary sequence is described according to Fig. 3:
1. In a first step S11 of this embodiment, the UE 10 sends Attach/TAU/TAU or LAU request to the core network CN 14 (as per existing specifications),
2. In a second step S12 of this embodiment, the CN 14 (e.g. the MME or SGSN) invokes a UE Radio Capability Match Request procedure (e.g. according to procedures defined in 3GPP TS 23.060 and/or TS 23.401),
3. In a third step S13 of this embodiment, the RAN (e.g. eNB or RNC) perform necessary checks e.g. according to procedures defined in 3GPP TS 23.060 and/or 3GPP TS 23.401. The RAN provides a positive feedback to CN 14, and initiates applying certain mobility procedures for this UE to ensure the UE can access the wanted services (e.g. IMS PS voice). Thereto, the RAN might store a mobility strategy for this UE to be applied in appropriate procedures, e.g. the eNB sends dedicated cell reselection information to the UE using "idleModeMobilityControllnfo" (providing dedicated cell reselection priorities) as defined in 3GPP TS 36.331, version 11.0.0. The RAN node might apply similar procedures according to this standard (the strategy might be forwarded to target RAN nodes e.g. in transparent containers, to ensure target RAN node applies same mobility strategy).
4. In a fourth step S14 of this embodiment, based on positive feedback from RAN, the CN (MME/SGSN) sends a corresponding information (e.g. sets the IMS PS Voice supported indicator to TRUE in the Attach/RAU/TAU Accept message) towards the UE (e.g. according to procedures defined in 3GPP TS 23.060 and/or TS 23.401).
5. In a fifth step S15 of this embodiment, an attach/TAU/RAU/LAU Accept message is returned from CN 14 to UE 10 (as per current specifications).

Alternatives to using the UE Radio Capability Match Request procedure as a trigger for RAN 12 to apply the specific mobility strategy for the UE 10 might be allocating Special RFSP/SPID the MME/SGSN sending SRVCC possible to RNC/eNB or sending a new indication from SGSN/MME towards the eNB/RNC as shown above.

### Abbreviations:

- CN: Core Network
- eNB: evolved Node B
- E-UTRAN: Evolved UTRAN
- EMM: EPS Mobility Management
- EPS: Evolved Packet System
- IMS: IP Multimedia Subsystem
- GMM/SM: GPRS Mobility Management and Session Management
- MME: Mobility Management Entity
- QCI: QoS Class Identifier
- QoS: Quality of Service
- RAN: Radio Access Network
- RAU: Routing Area Update
- RFSP: RAT/Frequency Selection Priority
- SPID: Subscriber Profile ID
- SRVCC: Single Radio Voice Call Continuity
- rSRVCC: reverse Single Radio Voice Call Continuity
- SGSN: Serving GPRS Support Node
- TAU: Tracking Area Update
- UTRAN: UMTS Terrestrial Radio Access Network

## Claims

1. A method of providing a certain communication service with respect to a user equipment, UE, (10) in a cellular communications network, the communications network comprising a radio access network, RAN, node (12) and a plurality of cells within an area comprising at least a first cell and a second cell, wherein at least the first cell of the plurality of cells is capable of supporting the certain service, and a core network, CN, node (14) involved in a bearer activation process with respect to the UE (10), the radio access network node (12) performing the following steps:
- receiving from the CN node (14) an information indicative that the UE (10) requests the certain service, while the UE (10) is camping on the second cell,
**characterized in that**
- in case the second cell is not capable of supporting the certain service, the radio access network node (12) performs:
- sending an indication from the RAN node (12) to the CN node (14) indicative that UE radio capabilities match the network configuration within the area comprising at least the first cell and the second cell, wherein at least the first cell is capable of supporting the certain service and the second cell is not capable of supporting the certain service, and
- initiating a movement of the UE (10) to the first cell.

2. The method of the preceding claim, wherein receiving the information comprises receiving a bearer setup request from the CN node (14).

3. The method of the preceding claim, further comprising checking whether radio resources according to the bearer setup request can be setup in the current cell, and initiating the movement of the UE (10) to the first cell in case that the radio resources cannot be setup.

4. The method of any one of the preceding claims, wherein initiating the movement of the UE (10) to the first cell comprises initiating a cell handover or a relocation process such that a camping with respect to the UE (10) is changed from the second cell to the first cell.

5. The method of any one of the preceding claims, further comprising establishing the radio resources involving the first cell according to the bearer setup request, and sending a corresponding information message to the core network node.

6. The method of claim 1, comprising:
- receiving from the CN node (14) a capability match request,
- providing a positive feedback to the CN node (14) so that the CN node (14) sends a corresponding information towards the UE (10), and
- initiating applying certain mobility procedures for this UE (10) to ensure that the UE (10) can access the service requested by the UE (10).

7. The method of the preceding claim, wherein the corresponding information sent towards the UE (10) comprises a service support indicator set to TRUE in an Attach/RAU/TAU Accept message.

8. The method of the previous claim, wherein the RAN node (12) stores a mobility strategy for the UE (10) to be applied in appropriate procedures.

9. The method of any one of the preceding claims, wherein the CN node (14) is one of: a Mobility Management Entity and a Serving GPRS Support Node.

10. The method of any one of the preceding claims, wherein the RAN node (12) is one of: an evolved Node B, a radio network controller, and a base station controller.

11. The method of any one of the preceding claims, wherein the certain service is any one of: a voice service over PS, a voice service over IMS, IMS PS voice, SRVCC, rSRVCC, and IPTV.

12. A radio access network node (12) being adapted to perform the steps of any one of the preceding claims.

13. A computer program loadable into a processing unit of a radio access network node (12), the computer program comprising code adapted to execute the steps of claim 1 or any one of the preceding method claims.

## Patentansprüche

1. Verfahren zum Bereitstellen eines bestimmten Kommunikationsdienstes in Bezug auf ein Benutzergerät, UE, (10) in einem zellularen Kommunikationsnetz, wobei das Kommunikationsnetz einen Funkzugangsnetz(RAN)-Knoten (12) und eine Vielzahl von Zellen innerhalb eines Bereichs umfasst, der mindestens eine erste Zelle und eine zweite Zelle umfasst, wobei mindestens die erste Zelle der Vielzahl von Zellen in der Lage ist, den bestimmten Dienst zu unterstützen, und einen Kernnetz(CN)-Knoten (14), der an einem Trägeraktivierungsprozess in Bezug auf das UE (10) beteiligt ist, wobei der Funkzugangsnetzknoten (12) die folgenden Schritte durchführt:
- Empfangen einer Information vom CN-Knoten (14), die anzeigt, dass das UE (10) den bestimmten Dienst anfordert, während das UE (10) auf der zweiten Zelle campiert, **dadurch gekennzeichnet, dass**
- falls die zweite Zelle nicht in der Lage ist, den bestimmten Dienst zu unterstützen, der Funkzugangsnetzknoten (12) Folgendes ausführt:
- Senden einer Anzeige vom RAN-Knoten (12) an den CN-Knoten (14), die anzeigt, dass die UE-Funkübertragungsfähigkeiten mit der Netzkonfiguration in dem Bereich übereinstimmen, der mindestens die erste Zelle und die zweite Zelle umfasst, wobei mindestens die erste Zelle in der Lage ist, den bestimmten Dienst zu unterstützen, und die zweite Zelle nicht in der Lage ist, den bestimmten Dienst zu unterstützen, und
- Initiieren einer Bewegung des UE (10) zur ersten Zelle.

2. Verfahren nach dem vorhergehenden Anspruch, wobei das Empfangen der Information das Empfangen einer Trägereinrichtanforderung vom CN-Knoten (14) umfasst.

3. Verfahren nach dem vorhergehenden Anspruch, ferner umfassend die Prüfung, ob Funkressourcen gemäß der Trägereinrichtanforderung in der aktuellen Zelle eingerichtet werden können, und Initiieren der Bewegung des UE (10) zur ersten Zelle, falls die Funkressourcen nicht eingerichtet werden können.

4. Verfahren nach einem der vorhergehenden Ansprüche, wobei das Initiieren der Bewegung des UE (10) zur ersten Zelle das Initiieren einer Zellübergabe oder eines Verlagerungsprozesses umfasst, sodass ein Campieren in Bezug auf das UE (10) von der zweiten Zelle zur ersten Zelle geändert wird.

5. Verfahren für einen der vorhergehenden Ansprüche, ferner umfassend das Herstellen der Funkressourcen, an denen die erste Zelle beteiligt ist, gemäß der Trägereinrichtanforderung, und das Senden einer entsprechenden Informationsmeldung an den Kernnetzknoten.

6. Verfahren nach Anspruch 1, umfassend:
- Empfangen einer Fähigkeitsabstimmungsanforderung vom CN-Knoten (14),
- Liefern einer positiven Rückmeldung an den CN-Knoten (14), sodass der CN-Knoten (14) eine entsprechende Information an das UE (10) sendet, und
- Initiieren der Anwendung bestimmter Mobilitätsverfahren für dieses UE (10), um sicherzustellen, dass das UE (10) auf den vom UE (10) angeforderten Dienst zugreifen kann.

7. Verfahren nach dem vorhergehenden Anspruch, wobei die entsprechende Information, die an das UE (10) gesendet wird, einen Dienstunterstützungsindikator umfasst, der in einer Attach/RAU/TAU Accept-Meldung auf TRUE gesetzt ist.

8. Verfahren nach dem vorhergehenden Anspruch, wobei der RAN-Knoten (12) eine Mobilitätsstrategie für das UE (10) speichert, die in geeigneten Prozessen anzuwenden ist.

9. Verfahren nach einem der vorhergehenden Ansprüche, wobei der CN-Knoten (14) einer der folgenden ist: eine Mobilitätsverwaltungseinheit und ein bedienender GPRS-Unterstützungsknoten.

10. Verfahren nach einem der vorhergehenden Ansprüche, wobei der RAN-Knoten (12) einer der folgenden ist: ein Evolved-Node-B, eine Funknetzsteuerung und eine Basisstationssteuerung.

11. Verfahren nach einem der vorhergehenden Ansprüche, wobei der bestimmte Dienst einer der folgenden ist: ein Sprachdienst über PS, ein Sprachdienst über IMS, IMS PS voice, SRVCC, rSRVCC und IPTV.

12. Funkzugangsnetzknoten (12) auslegt zum Durchzuführen der Schritte einer der vorhergehenden Ansprüche.

13. Computerprogramm, das in eine Verarbeitungseinheit eines Funkzugangsnetzknotens (12) geladen werden kann, wobei das Computerprogramm einen Code umfasst, der ausgelegt ist zum Ausführen der Schritte nach Anspruch 1 oder einem der vorhergehenden Verfahrensansprüche.

## Revendications

1. Procédé de fourniture d'un certain service de communication par rapport à un équipement d'utilisateur, UE, (10) dans un réseau de communication cellulaire, le réseau de communication comprenant un noeud de réseau d'accès radio, RAN, (12) et une pluralité de cellules à l'intérieur d'une zone comprenant au moins une première cellule et une seconde cellule, dans lequel au moins la première cellule de la pluralité de cellules est capable de supporter le certain service, et un noeud de réseau central, CN, (14) impliqué dans un processus d'activation de support par rapport à l'UE (10), le noeud de réseau d'accès radio (12) réalisant les étapes suivantes :
- la réception à partir du noeud CN (14) d'une information indiquant que l'UE (10) demande le certain service, pendant que l'UE (10) est mis en attente sur la seconde cellule, **caractérisé en ce que**
- dans le cas où la seconde cellule n'est pas capable de supporter le certain service, le noeud de réseau d'accès radio (12) réalise :
- l'envoi d'une indication à partir du noeud RAN (12) au noeud CN (14) indiquant que les capacités radio de l'UE correspondent à la configuration de réseau à l'intérieur de la zone comprenant au moins la première cellule et la seconde cellule, dans lequel au moins la première cellule est capable de supporter le certain service et la seconde cellule n'est pas capable de supporter le certain service, et
- l'initiation d'un déplacement de l'UE (10) vers la première cellule.

2. Procédé selon la revendication précédente, dans lequel la réception de l'information comprend la réception d'une demande de réglage de support du noeud CN (14).

3. Procédé selon une quelconque revendication précédente, comprenant en outre le fait de vérifier si des ressources radio en fonction de la demande de réglage de support peuvent être réglées dans la cellule actuelle, et l'initiation du déplacement de l'UE (10) vers la première cellule dans le cas où les ressources radio ne peuvent pas être réglées.

4. Procédé selon l'une quelconque des revendications précédentes, dans lequel l'initiation du déplacement de l'UE (10) vers la première cellule comprend l'initiation d'un transfert de cellule ou d'un processus de réinstallation de sorte qu'une mise en attente par rapport à l'UE (10) passe de la seconde cellule à la première cellule.

5. Procédé selon l'une quelconque des revendications précédentes, comprenant en outre l'établissement des ressources radio impliquant la première cellule en fonction de la demande de réglage de support, et l'envoi d'un message d'information correspondant au noeud de réseau central.

6. Procédé selon la revendication 1, comprenant :
- la réception à partir du noeud CN (14) d'une demande de mise en correspondance de capacité,
- la fourniture d'une rétroaction positive au noeud CN (14) de sorte que le noeud CN (14) envoie une information correspondante à l'UE (10), et
- l'initiation de l'application de certaines procédures de mobilité pour cet UE (10) pour s'assurer que l'UE (10) peut accéder au service demandé par l'UE (10).

7. Procédé selon la revendication précédente, dans lequel l'information correspondante envoyée à l'UE (10) comprend un indicateur de support de service défini sur TRUE dans un message d'acceptation Attach/RAU/TAU.

8. Procédé selon la revendication précédente, dans lequel le noeud RAN (12) enregistre une stratégie de mobilité pour l'UE (10) à appliquer dans des procédures appropriées.

9. Procédé selon l'une quelconque des revendications précédentes, dans lequel le noeud CN (14) est l'un parmi : une entité de gestion de mobilité et un noeud de support GPRS de service.

10. Procédé selon l'une quelconque des revendications précédentes, dans lequel le noeud RAN (12) est l'un parmi : un noeud évolué B, un contrôleur de réseau radio et un contrôleur de station de base.

11. Procédé selon l'une quelconque des revendications précédentes, dans lequel le certain service est l'un parmi :
un service vocal sur PS, un service vocal sur IMS, une voix IMS PS, SRVCC, rSRVCC et IPTV.

12. Noeud de réseau d'accès radio (12) étant conçu pour réaliser les étapes selon l'une quelconque des revendications précédentes.

13. Programme informatique pouvant être chargé dans une unité de traitement d'un noeud de réseau d'accès radio (12), le programme informatique comprenant un code conçu pour exécuter les étapes selon la revendication 1 ou selon l'une quelconque des revendications précédentes.
